# EUROPÄISCHE PATENTANMELDUNG

(11) **EP 3 034 173 A1**
(43) Veröffentlichungstag der Anmeldung: **22.06.2016**
(21) Anmeldenummer: 15003596.2
(22) Anmeldetag: 17.12.2015
(51) Int. Cl.: B03C 3/017, B03C 3/019, B03C 3/08, B03C 3/12, B03C 3/41, B03C 3/47, B01D 53/32, B05B 15/12

(54) **VORRICHTUNG UND VERFAHREN ZUM ABSCHEIDEN VON PARTIKELN AUS EINEM ABLUFTSTROM EINER BESCHICHTUNGSKABINE**

(30) Priorität: 17.12.2014 DE 102014018903
(71) Anmelder: Eisenmann SE, 71032 Böblingen (DE)
(72) Erfinder: Schlipf, Michael, 73035 Göppingen (DE)
(74) Vertreter: Ostertag & Partner Patentanwälte

(57) **Zusammenfassung**

Die vorliegende Erfindung betrifft eine Vorrichtung zum Abscheiden von Partikeln aus einem Abluftstrom, wobei die Vorrichtung einen Eintrittsbereich (36) für den Abluftstrom, einen Austrittsbereich (38) für den Abluftstrom, eine entlang des Abluftstroms angeordnete Abscheideeinrichtung (74) und mindestens eine Elektrodenanordnung aufweist, welche Elektrodenanordnung mit einer Hochspannungsquelle verbunden ist, wobei ein Aufladungsbereich (40) vorgesehen ist, welcher zum Ausbilden einer mit elektrischen Ladungen angereicherten Schicht ein oder mehrere Elektroden (60, 62) aufweist, und wobei ein Abscheideflächen (70) aufweisender Abscheidebereich (34) vorgesehen ist, welcher dem Aufladungsbereich (40) nachgeordnet ist. Die Erfindung betrifft auch ein Verfahren zum Abscheiden von Partikeln aus dem Abluftstrom einer Beschichtungskabine (2), wobei der Abluftstrom zunächst durch einen Aufladungsbereich (40) geführt wird, in dem eine Aufladung von Partikeln der Abluft erfolgt, und wobei der Abluftstrom nach Verlassen des Aufladungsbereichs (40) einen Abscheidebereich (34) durchströmt, in dem sich aufgeladene Partikel der Abluft an Abscheideflächen (70) abscheiden.

## Beschreibung

Die Erfindung betrifft eine Vorrichtung zum Abscheiden von Partikeln aus einem Abluftstrom, mit einem Eintrittsbereich für den Abluftstrom, mit einem Austrittsbereich für den Abluftstrom, mit einer Abscheideeinrichtung, welche entlang des Abluftstroms angeordnet ist, und mit mindestens einer Elektrodenanordnung, welche mit einer Hochspannungsquelle verbunden ist.

Die Erfindung betrifft auch ein Verfahren zum Abscheiden von Partikeln aus dem Abluftstrom einer Beschichtungskabine.

Aus der DE 10 2008 046 414 A1 ist eine Vorrichtung zum Abscheiden von Lack-Overspray aus der mit Overspray beladenen Kabinenabluft von Lackieranlagen bekannt, welche Vorrichtung mindestens eine Abscheidefläche umfasst, an welcher die Kabinenabluft entlang führbar ist und welche mit einem Pol einer Hochspannungsquelle verbunden ist, wobei eine im Luftstrom angeordnete Elektrodeneinrichtung der Abscheidefläche zugeordnet und mit dem anderen Pol der Hochspannungsquelle verbunden ist.

Die DE 10 2012 009 723 A1 beschreibt eine weitere Vorrichtung zum Abscheiden von Lack-Overspray aus der mit Overspray beladenen Kabinenabluft von Lackieranlagen mit Abscheidemitteln, an welchen die Kabinenabluft entlang führbar ist und welche auf dem Potential eines Pols einer Hochspannungsquelle liegen, mit einer im Luftstrom angeordneten Elektrodeneinrichtung, welche mit dem anderen Pol der Hochspannungsquelle verbunden ist, und mit einer Einrichtung, mittels welcher wenigstens ein frei fallender Abscheidevorhang aus einem Abscheidematerial erzeugbar ist, der als Abscheidemittel dient und mit der Elektrodeneinrichtung zusammenarbeitet.

Aufgabe der vorliegenden Erfindung ist es, eine Vorrichtung bzw. ein Verfahren zum Abscheiden von Partikeln, insbesondere Overspray, aus dem Abluftstrom einer Beschichtungskabine bereitzustellen, welches gegenüber dem Stand der Technik weiterentwickelt ist.

Diese Aufgabe wird gelöst durch eine Vorrichtung der eingangs genannten Art mit einem Aufladungsbereich, welcher zum Ausbilden einer mit elektrischen Ladungen angereicherten Schicht ein oder mehrere Elektroden aufweist, und mit einem Abscheidebereich, welcher Abscheideflächen aufweist und dem Aufladungsbereich nachgeordnet ist. Derart wird eine räumliche Trennung der Elektroden vom Abscheidebereich bewirkt. Somit wird eine Vorrichtung zum Abscheiden von Partikeln bereitgestellt, deren Aufbau im Hinblick auf Inbetriebsetzung, Instandhaltung, Reinigung und Wartung günstiger als der Stand der Technik ausgebildet ist. Die sich ergebenden Vorteile betreffen beispielsweise die Reinigung bzw. den Austausch von Elektroden im Aufladungsbereich und/oder von Teilen der Abscheideeinrichtung im Abscheidebereich, wobei eine Reinigung bzw. ein Austausch unabhängig vom jeweils anderen Bereich der Vorrichtung erfolgen kann. Dadurch, dass es erfindungsgemäß ermöglicht wird, auf das Vorsehen von Elektroden im Abscheidebereich zu verzichten, kann die Effizienz der Abscheidung verbessert werden, beispielsweise durch das Vorsehen größerer bzw. einer größeren Anzahl von Abscheideflächen. Die erfindungsgemäße Vorrichtung zeichnet sich durch eine geringe Störanfälligkeit aus.

Mit Vorteil kann die mit elektrischen Ladungen angereicherte Schicht des Aufladungsbereichs derart ausgebildet sein, dass sie den Abscheidebereich zumindest im Wesentlichen überdeckt. Derart wird ein besonders hoher Anteil der im Luftstrom befindlichen Partikel noch vor Eintritt des Luftstroms in den Abscheidebereich mit hoher Zuverlässigkeit elektrisch aufgeladen.

Beispielsweise um die Störanfälligkeit der Vorrichtung weiter zu reduzieren, kann es zweckmäßig sein, wenn die ein oder mehreren Elektroden in mehreren Elektrodenebenen angeordnet sind.

Vorzugsweise können sich ein oder mehrere Elektroden einer ersten Elektrodenebene im Wesentlichen längs einer ersten Richtung erstrecken, wobei sich ein oder mehrere Elektroden einer zweiten Elektrodenebene sich im Wesentlichen längs einer zweiten Richtung erstrecken, welche sich von der ersten Richtung unterscheidet. Derart kann die Aufladung der Partikel im Luftstrom weiter verbessert werden.

Beispielsweise um die Verschmutzung der Elektrodenanordnung möglichst gering zu halten, kann es von Vorteil sein, wenn die erste Elektrodenebene und die zweite Elektrodenebene beabstandet zueinander angeordnet sind.

Es kann weiterhin zweckmäßig sein, mindestens eine erste Hochspannungsquelle vorzusehen, die der ersten Elektrodenebene zugeordnet ist, und mindestens eine zweite Hochspannungsquelle vorzusehen, die der zweiten Elektrodenebene zugeordnet ist. Derart kann eine Systemredundanz bereitgestellt werden, welche die Betriebssicherheit erhöht.

Im Hinblick auf eine möglichst einfache und robuste Konstruktion kann es zweckmäßig sein, wenn die erste Elektrodenebene und die zweite Elektrodenebene einander berührend ausgebildet sind.

Um die Effizienz und Zuverlässigkeit des Aufladens der im Luftstrom vorhandenen Partikel im Aufladungsbereich weiter zu verbessern, kann es von Vorteil sein, wenn mindestens eine der Elektroden mehrere Spitzen aufweist, welche Spitzen zumindest teilweise aus der Elektrodenebene hervorragen, in welcher sich die mindestens eine Elektrode erstreckt.

Vorzugsweise können die Elektroden modular aus der Vorrichtung entnehmbar ausgebildet sein. Derart wird beispielsweise eine günstigere Reinigung ermöglicht, wobei die Elektroden in entnommenem Zustand gereinigt werden können.

Hinsichtlich der Handhabung der Elektrodenanordnung, beispielsweise zur Reinigung und/oder Wartung, bzw. hinsichtlich des Aufladens von Partikeln im Aufladungsbereich kann es von Vorteil sein, wenn die Elektroden eine gitterförmige Anordnung ausbilden.

Beispielsweise um die Betriebssicherheit zu erhöhen bzw. um eine möglichst bedarfsgerechte Funktionsweise zu bewirken, kann es zweckmäßig sein, wenn der Aufladungsbereich mehrere Teilabschnitte aufweist, wobei für einen Teilabschnitt jeweils mindestens eine Hochspannungsquelle vorgesehen ist.

Die oben genannte Aufgabe wird auch gelöst durch eine Anlage zum Beschichten von Gegenständen mit einer Beschichtungskabine und mit einem an die Beschichtungskabine angrenzenden Anlagenbereich, wobei die Beschichtungskabine eine Öffnung aufweist, durch welche ein Abluftstrom der Beschichtungskabine dem angrenzenden Anlagenbereich zuführbar ist, und wobei in dem angrenzenden Anlagenbereich eine Vorrichtung gemäß der Erfindung oder einer ihrer Ausgestaltungen angeordnet ist. Eine derartige Anlage zeichnet sich aus durch eine geringe Störanfälligkeit und einen verbesserten Betrieb. Vorteilhafterweise ist die Beschichtungskabine eine Lackierkabine für Fahrzeugkarosserien.

Im Hinblick auf einen bedarfsgerechten und funktionssicheren Betrieb der Anlage kann es zweckmäßig sein, wenn die Anlage mehrere Teilabschnitte aufweist, denen jeweils Teilabschnitte des Aufladungsbereichs zugeordnet sind, wobei für einen Teilabschnitt des Aufladungsbereichs jeweils mindestens eine Hochspannungsquelle vorgesehen ist.

Die Erfindung wird auch gelöst durch ein Verfahren zum Abscheiden von Partikeln aus dem Abluftstrom einer Beschichtungskabine, wobei der Abluftstrom zuerst durch einen Aufladungsbereich geführt wird, der von Elektroden durchzogenen ist und in dem eine Aufladung von Partikeln der Abluft erfolgt, und wobei der Abluftstrom anschließend durch einen Abscheidebereich geführt wird, in dem sich Partikel der Abluft an Abscheideflächen abscheiden. Die Vorteile des erfindungsgemäßen Verfahrens ergeben sich insbesondere analog zu den Vorteilen der erfindungsgemäßen Vorrichtung.

Weitere vorteilhafte Ausgestaltungen ergeben sich aus der nachfolgenden Beschreibung. Dabei werden Ausführungsbeispiele der Erfindung, ohne hierauf beschränkt zu sein, an Hand der Zeichnungen näher erläutert. Es zeigt, jeweils in vereinfachter, schematischer Darstellung:
- Figur 1: eine Vorderansicht einer Lackierkabine einer Oberflächenbehandlungsanlage mit einer Vorrichtung zum Abscheiden von Overspray;
- Figur 2: einen Ausschnitt einer Seitenansicht einer Lackierkabine einer Oberflächenbehandlungsanlage mit einer Vorrichtung zum Abscheiden von Overspray;
- Figur 3: eine perspektivische Teilansicht einer Lackierkabine einer Oberflächenbehandlungsanlage mit einer Vorrichtung zum Abscheiden von Overspray;
- Figur 4: eine stark vereinfachte und ausschnittsweise Vorderansicht einer Elektrodenanordnung einer Vorrichtung zum Abscheiden von Overspray.

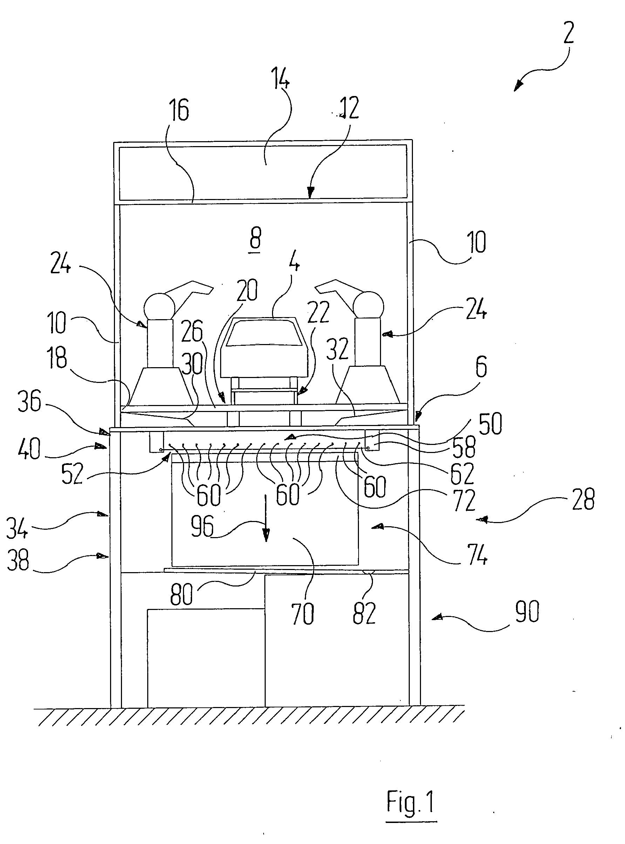

Die Figuren 1 bis 3 zeigen eine Anlage zum Beschichten von Gegenständen mit einer Beschichtungskabine 2. In den gezeigten Beispielen ist die Beschichtungskabine 2 als Lackierkabine ausgebildet, in welcher Fahrzeugkarosserien 4 mit Beschichtungsmaterial in Form von Lack beaufschlagt werden. In den Figuren 1 bis 3 ist ein an und für sich bekannter Unterbau 6, beispielsweise ein Stahlbau, angedeutet, auf dem die Lackierkabine ruht.

Die als Lackierkabine ausgebildete Beschichtungskabine 2 weist einen Lackiertunnel 8 auf, welcher seitlich von Wänden 10 und oberhalb von einer Kabinendecke 12 begrenzt ist. Der Lackiertunnel 8 kann an seinen nicht näher dargestellten Stirnseiten offen ausgebildet bzw. mit mindestens einer Schleuseneinrichtung versehen sein. Eine untere Öffnung 18 des Lackiertunnels 8 ist gemäß den gezeigten Beispielen durch einen Gitterrost 26 abgedeckt, welcher vorzugsweise begehbar ausgebildet sein kann.

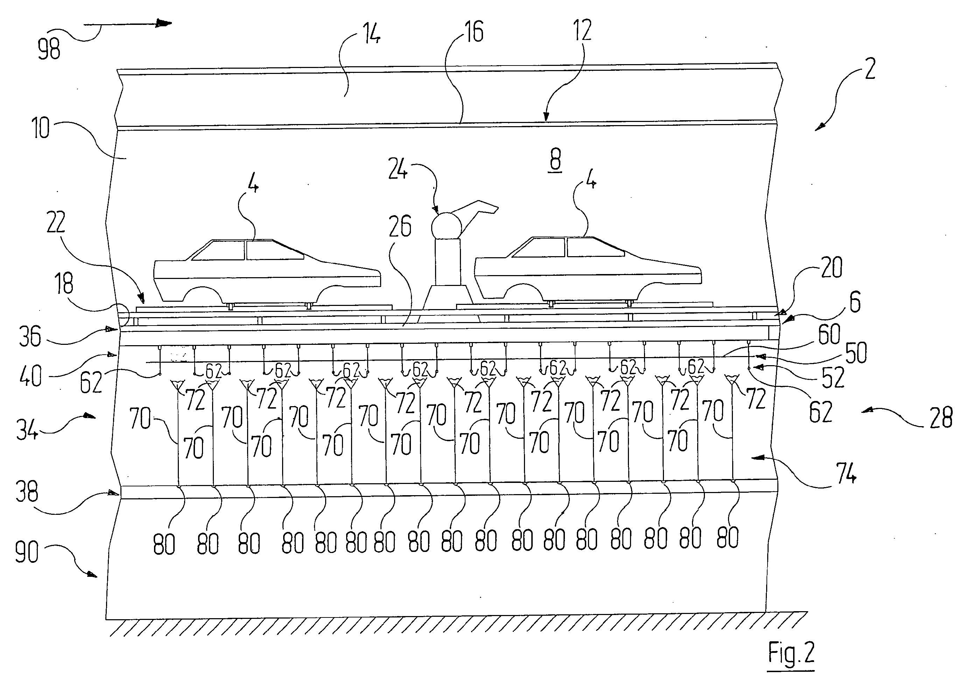

Auf der unteren Öffnung 18 des Lackiertunnels 8 ist in den gezeigten Beispielen ein Stahlbau 20 vorgesehen, oberhalb dessen ein Fördersystem 22 angeordnet ist. Mit Hilfe des Fördersystems 22 können zu lackierende Fahrzeugkarosserien 4 von einer Eingangsseite des Lackiertunnels 8 zu einer Ausgangsseite des Lackiertunnels 8 gefördert werden. Fig. 2 zeigt ein Beispiel, gemäß dem die Fahrzeugkarosserien 4 mittels des Fördersystems 22 in Richtung des Pfeils 98 bewegt werden.

Im Inneren des Lackiertunnels 8 befinden sich gemäß den in den Figuren 1 bis 3 gezeigten Beispielen Applikationseinrichtungen, welche vorliegend in Form von Applikationsrobotern 24 veranschaulicht sind und mittels derer die Fahrzeugkarosserien 4 beispielsweise mit Lack beschichtet werden können. Mittels der Applikationsroboter 24 kann Lack automatisch appliziert werden.

In der Regel wird bei der manuellen oder automatischen Applikation von Lacken auf Gegenstände ein Teilstrom des Lackes, der im Allgemeinen sowohl Festkörper und/oder Bindemittel als auch Lösemittel enthält, nicht auf den Gegenstand appliziert. Dieser Teilstrom wird als Overspray bezeichnet.

Gemäß den in den Figuren 1 bis 3 gezeigten Beispielen bildet die Kabinendecke 12 die untere Begrenzung eines Luftzuführraumes 14 und ist als Filterdecke 16 ausgebildet. Über den Luftzuführraum 14 strömt Luft, vorzugsweise konditionierte Luft, als Kabinenluft von oben in den Lackiertunnel 8 ein. Der Lackiertunnel 8 ist oberhalb eines Anlagenbereichs 28 angeordnet und nach unten hin in der Weise offen, dass Kabinenabluft nach unten strömen kann und als Abluftstrom in den Anlagenbereich 28 eintreten kann. Dementsprechend ist die untere Öffnung 18 des Lackiertunnels luftdurchlässig ausgebildet, wobei eine geeignete Abdeckung der Öffnung 18 vorgesehen sein kann, z.B. der in den Beispielen gezeigte Gitterrost 26.

Die Luft nimmt beim Durchströmen des Lackiertunnels 8 Partikel auf, insbesondere Overspray bzw. Overspray-Partikel. Mit dem Abluftstrom werden derartige Partikel aus dem Lackiertunnel 8 abgeführt. In den gezeigten Beispielen strömt die mit Overspray beladene Kabinenabluft aus der Lackierkabine als Abluftstrom nach unten in den Anlagenbereich 28.

In dem unterhalb der Beschichtungskabine 2 angeordneten Anlagenbereich 28 werden von der Kabinenluft im Abluftstrom mitgeführte Partikel von der Kabinenluft getrennt. Der von dem Luftstrom in der Lackierkabine erfasste Overspray wird im Anlagenbereich 28 einer Abscheidung zugeführt, sodass die Luft gegebenenfalls nach einer geeigneten Konditionierung zumindest teilweise wieder in die Beschichtungskabine 2 zurückgeleitet werden kann.

Der aus der Beschichtungskabine 2 in den Anlagenbereich 28 geführte Abluftstrom tritt zunächst in einen Eintrittsbereich 36. Dem Eintrittsbereich 36 in Strömungsrichtung nachgeordnet ist ein Aufladungsbereich 40 vorgesehen. Wiederum in Strömungsrichtung nachgeordnet ist ein Abscheidebereich 34 vorgesehen. Dem Abscheidebereich 34 in Strömungsrichtung nachgeordnet ist ein Austrittsbereich 38 vorgesehen. Die Strömungsrichtung des Abluftstroms ist in Fig. 1 durch den Pfeil 96 angedeutet.

Im Aufladungsbereich 40, den der Abluftstrom vor Erreichen des Abscheidebereichs 34 durchströmt, werden in der Abluft vorhandene Partikel elektrisch aufgeladen. Im nachgeordneten Abscheidebereich 34 werden Partikel der Abluft in einer Abscheideeinrichtung 74 abgeschieden.

Im Abscheidebereich 34 wird der Abluftstrom an den Abscheideflächen 70 entlang geführt. An den Abscheideflächen 70 können sich Partikel aus dem Abluftstrom an einem Abscheidematerial wie beispielsweise Wasser abscheiden. In den Figuren 1 bis 3 sind geeignete Abscheideflächen 70 einer Abscheideeinrichtung 74 angedeutet, an denen sich Partikel der Abluft abscheiden können.

Die in den Figuren 1 bis 3 lediglich angedeuteten Abscheideflächen 70 können beispielsweise als seitliche Flächen nicht näher dargestellter Abscheideeinheiten ausgebildet sein. Dabei können die Abscheideflächen 70 beispielsweise an Seitenplatten solcher Abscheideeinheiten vorgesehen sein. Vorzugsweise können Benetzungsmittel für die Abscheideflächen 70 vorgesehen sein, mit Hilfe derer die Abscheideflächen 70 mit einem Abscheidemittel benetzt werden. Den Abscheideflächen 70 zugeordnet können beispielsweise ein oder mehrere Abgaberinnen 72 (siehe Figuren 1 und 2) zur Abgabe einer Abscheideflüssigkeit vorgesehen sein. Um Partikel von den Abscheideflächen 70 abzuführen, kann die Abscheideflüssigkeit von den Abscheideflächen 70 abfließen.

Alternativ oder zusätzlich können Abscheideflächen 70 nach Art eines Vorhangs aus Abscheidematerial gebildet werden, wobei das Abscheidematerial von einer Abgaberinne 72 (siehe Figuren 1 und 2) abgegeben wird. Eine Abgaberinne 72 kann dabei mit einem nicht näher dargestellten Austrittsschlitz versehen sein, über welchen das Abscheidematerial nach unten austreten kann.

Als Abscheidematerial können grundsätzlich sowohl Flüssigkeiten als auch Feststoffe oder Gemische daraus verwendet werden. Bei einem flüssigen Abscheidematerial, wie beispielsweise Wasser, oder einem Gemisch aus Flüssigkeit und Feststoffen wird vorzugsweise und wie in Figur 2 angedeutet, ein zusammenhängender Flüssigkeitsfilm erzeugt. Im Falle eines festen Abscheidematerials müssen Maßnahmen ergriffen, so dass die Abscheideflächen 70 mit einer weitgehend zusammenhängenden Feststoffschicht beaufschlagt werden können.

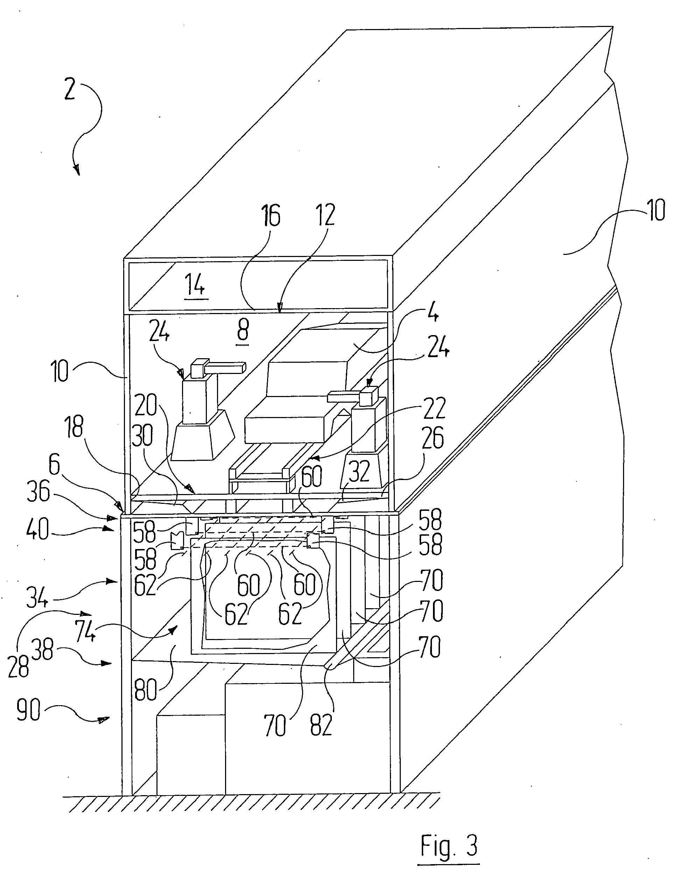

Zur Abfuhr von abgeschiedenem Material aus dem Abscheidebereich 34 kann eine Sammelrinne 82 (siehe Figuren 1 und 3) vorgesehen sein. Weiterhin können unterhalb der Abscheideflächen 70 geeignete Auffangmittel 80 (siehe Figuren 1 bis 3) für Abscheidematerial bzw. für Abscheideflüssigkeit vorgesehen sein. Die Auffangmittel 80 können beispielsweise als ein oder mehrere Auffangrinnen ausgebildet sein. Aufgefangenes Abscheidematerial bzw. aufgefangene Abscheideflüssigkeit sowie darin mitgeführte abgeschiedene Partikel können beispielsweise mittels der Sammelrinne 82 abgeführt werden.

Die Figuren 1 bis 3 zeigen einen Aufladungsbereich 40, der zum Ausbilden einer mit elektrischen Ladungen angereicherten Schicht eine Elektrodenanordnung mit ein oder mehreren Elektroden 60, 62 aufweist. Der Aufladungsbereich 40 ist dabei räumlich getrennt von dem Abscheidebereich 34 ausgebildet. Die Beispiele zeigen, dass zwischen den Abscheideflächen 70 des Abscheidebereichs 34 keine Elektroden 60, 62 angeordnet sind.

Die Elektroden 60, 62 sind mit ein oder mehreren Hochspannungsquellen verbunden, wobei diese Hochspannungsquellen in den Zeichnungen der besseren Übersicht halber nicht näher dargestellt sind. Die Elektroden 60, 62 sind vorzugsweise als negative Sprühelektroden ausgebildet. Die mit dem Pol einer Hochspannungsquelle verbundenen Elektroden 60, 62 können beispielsweise eine Hochspannung im Bereich von ca. 20kV bis ca. 80 kV, z.B. ungefähr 45 kV, aufweisen. In den unter Hochspannung stehenden Elektroden 60, 62 bildet sich eine Koronawolke, in welcher Partikel geladen werden.

Im Umfeld der Elektroden 60, 62 erfolgt eine effektive Ionisation der im Abluftstrom vorliegenden Partikel, z.B. Overspray. Die Ionisation der Partikel erfolgt dabei im elektrostatischen Feld einer die Elektroden 60, 62 umgebenden Koronawolke bzw. Koronahaut.

Im Aufladungsbereich 40 wird mittels der Elektroden 60, 62 eine Schicht erzeugt, in dem die Partikel des Abluftstroms aufgeladen werden. Das Aufladen erfolgt beispielsweise durch Feldaufladung bzw. durch Diffusionsaufladung, verursacht durch die Anlagerung von negativen Ladungen, wenn diese mit dem Partikel zusammenstoßen. Die aufgeladenen Partikel verlassen den Aufladungsbereich 40 und wandern mit dem Abluftstrom in den Abscheidebereich 34.

Der in den Abscheidebereich 34 eintretende Abluftstrom hat zuvor die mittels der Elektroden 60, 62 mit elektrischen Ladungen angereicherte Schicht im Aufladungsbereich 40 durchströmt. Eine Aufladung der Partikel im Abluftstrom erfolgt gemäß den gezeigten Beispielen im Aufladungsbereich 40 zumindest im Wesentlichen noch bevor die Partikel den Abscheidebereich 34 erreichen.

In Teilen des Abscheidebereichs 34 liegt ein Massepotential an, wobei vorzugsweise die Abscheideflächen 70 auf Massepotential liegen. Aufgeladene Partikel geben im Abscheidebereich 34 ihre Ladung ab und werden an den Abscheideflächen 70 durch Haftkräfte gebunden.

Bei der in den Beispielen gemäß den Figuren 1 bis 3 gezeigten Vorrichtung zum Abscheiden von Partikeln sind die aktiven Elemente im Aufladungsbereich 40 und die passiven Elemente im Abscheidebereich 34 angeordnet. Dabei bilden die unter Hochspannung stehenden Elektroden 60, 62 die aktiven Elemente aus, wobei die geerdeten Abscheideflächen 70 die passiven Elemente ausbilden.

Durch die Trennung der Abscheidung von der Hochspannung bzw. durch die Anordnung der passiven Elemente unterhalb der aktiven Elemente, wird eine robuste und fertigungstechnisch vorteilhafte Konstruktionsweise bereitgestellt, die wenig anfällig für Störungen ist. Auf das Vorsehen eines Sperrluftkanals kann bei einer derartigen Konstruktion ggf. verzichtet werden.

Die Elektroden 60, 62 sind wie in den Figuren 1 bis 4 angedeutet in ein oder mehreren Elektrodenebenen 50 bzw. 52 angeordnet. Die Elektrodenebenen 50, 52 sind in Fig. 3 erkennbar, der besseren Übersicht halber jedoch nicht mit Bezugszeichen versehen. Die Elektroden 60, 62 können beispielweise in Form von Drähten ausgebildet sein. Vorzugsweise erstrecken sich die Elektroden 60, 62 in mindestens einer Elektrodenebene 50, 52. Die Elektroden 60, 62 einer Elektrodenebene 50, 52 können beispielsweise in gleichen Abständen zueinander angeordnet sein.

Die Richtung, in welcher die Elektroden 60 in einer ersten Elektrodenebene 50 ausgerichtet sind, kann sich von der Richtung, in welcher die Elektroden 62 in einer ersten Elektrodenebene 52 ausgerichtet sind unterscheiden. Derart können die Elektroden 60, 62 eine gitterförmige Anordnung ausbilden. Die genannten Richtungen können beispielsweise in einem Winkel von 90° zueinander angeordnet sein.

Unterschiedliche Elektrodenebenen 50, 52 können zueinander beabstandet und/oder überlappend angeordnet sein, wobei sie sich gegebenenfalls berühren können. Sofern sich die Elektroden 60, 62 unterschiedlicher Elektrodenebenen 50 bzw. 52 nicht berühren bzw. kontaktieren können sie mit getrennten Hochspannungsquellen gekoppelt werden. Alternativ kann auch eine Koppelung mit einer gemeinsamen Hochspannungsquelle vorgesehen werden.

Es können Teilabschnitte mit jeweils abschnittsweise definierter Hochspannungsversorgung vorgesehen werden. Derartige Teilabschnitte können beispielsweise längs eines Lackiertunnels vorgesehen werden. Derartige Teilabschnitte können in einer Anlage mit einer Beschichtungskabine 2 beispielsweise entlang der Richtung des Materialflusses bzw. des Pfeils 98 (siehe Figur 2) angeordnet sein.

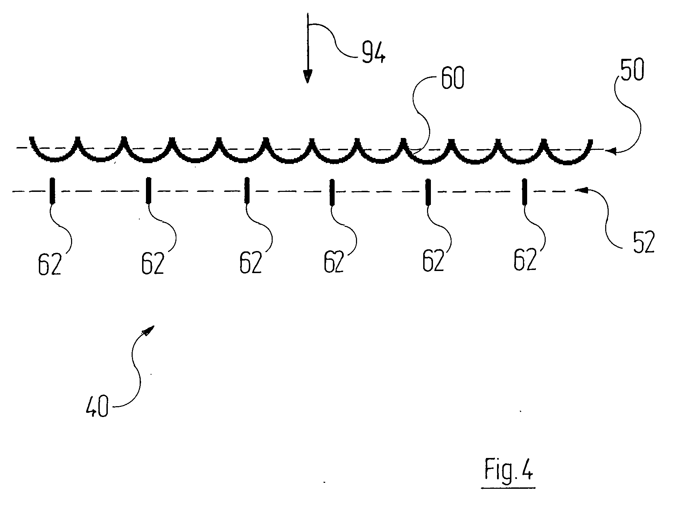

Die Elektroden 60, 62 können beispielsweise als sich zumindest im Wesentlichen geradlinig erstreckende Elemente ausgebildet sein. Vorteile bei der Aufladung können erzielt werden, wenn ein oder mehrere Elektroden 60, 62 ein oder mehrere Spitzen aufweisen. Vorzugsweise können derartige Spitzen zumindest teilweise aus einer Elektrodenebene 50, 52 hervorragen, wobei die Spitzen beispielsweise dornförmig ausgebildet sein können. Derartige Spitzen können beispielsweise auch durch Elektrode ausgebildet werden, deren Form einem Sägezahn ähnelt. Eine weitere Möglichkeit zur Ausbildung von Spitzen einer Elektrode 60, 62 veranschaulicht Fig. 4 in stark schematischer Darstellung an Hand der Elektrode 60.

Fig. 4 zeigt Elektroden 60, 62, welche sich im Wesentlichen in zwei übereinander angeordneten und voneinander beabstandeten Elektrodenebenen 50 bzw. 52 erstrecken. In dem in Fig. 4 gezeigten Beispiel sind die Spitzen der im Wesentlichen in der oberen Ebene 50 angeordneten Elektrode 60 gegen den Abluftstrom ausgerichtet, wobei der Abluftstrom gemäß Fig. 4 in Richtung des Pfeils 94 durch den Aufladungsbereich 40 strömt. Alternativ oder zusätzlich können z.B. Spitzen vorgesehen sein, die mit dem Abluftstrom, d.h. in Richtung des Pfeils 94, ausgerichtet sind.

In den Beispielen, die in den Figuren 1 bis 3 gezeigt sind, bewegt sich die Abluft im Anlagenbereich 28 vom Eintrittsbereich 36 hin zum Austrittsbereich 38. Zum Führen des Abluftstroms in, durch und aus dem Anlagenbereich 28 können Luftleitvorrichtungen vorgesehen sein. Die Figuren 1 und 3 zeigen beispielsweise Luftleitvorrichtungen, die als nach unten konvergierenden Luftleitbleche 30, 32 ausgebildet sind, zum Führen des Abluftstroms in Richtung auf und durch den Anlagenbereich 28.

Es können vorzugsweise ein oder mehrere Haltevorrichtungen 58 (siehe Figuren 1 und 3) für die Elektroden vorgesehen sein. Der besseren Übersicht halber ist in Fig. 1 nur eine der im gezeigten Beispiel symmetrisch angeordneten Haltevorrichtungen 58 mit einem Bezugszeichen versehen. Die mindestens eine Haltevorrichtung 58 ist vorzugsweise zumindest im Wesentlichen außerhalb des Abluftstroms angeordnet. Dementsprechend können die ein oder mehreren Haltevorrichtungen 58 beispielsweise von den Luftleitblechen 30, 32 überdeckt angeordnet sein. Die Haltevorrichtungen 58 können vorzugsweise derart ausgebildet sein, dass die Elektroden 60, 62, welche in Form von Modulen bzw. modularen Einheiten ausgebildet sein können, beispielsweise zur Reinigung leicht entnommen und vorzugsweise auch leicht wieder eingefügt werden können. Zweckmäßiger Weise können die Elektroden 60, 62 als gitterförmige Module in die mindestens eine Haltevorrichtung 58 eingelegt bzw. gehalten werden.

Gemäß den in den Figuren 1 bis 3 gezeigten Beispielen kann der Anlagenbereich 28 einen Konditionierbereich 90 aufweisen, in den der Abluftstrom nach Verlassen des Austrittsbereichs 38 gelangt. In dem Konditionierbereich 90 sind gegebenenfalls noch ein oder mehrere Filter vorhanden, um beispielsweise mögliche Restpartikel bzw. Oversprayreste oder sonstige Verunreinigungen aus dem Abluftstrom zu entfernen. Die gereinigte Kabinenluft kann dabei zumindest teilweise so konditioniert werden, dass sie in einem Kreislauf wieder zum Luftzuführraum 14 geführt werden kann, von wo sie wieder in den Lackiertunnel 8 einströmt. Zusätzlich oder alternativ kann dem Luftzuführraum 14 auch Außenluft bzw. Frischluft zugeführt werden.

Ein Gedanke, welcher der Erfindung zugrunde liegt, lässt sich wie folgt zusammenfassen: Die vorliegende Erfindung betrifft eine Vorrichtung zum Abscheiden von Partikeln aus einem Abluftstrom, wobei die Vorrichtung einen Eintrittsbereich 36 für den Abluftstrom, einen Austrittsbereich 38 für den Abluftstrom, eine entlang des Abluftstroms angeordnete Abscheideeinrichtung 74 und mindestens eine Elektrodenanordnung aufweist, welche Elektrodenanordnung mit einer Hochspannungsquelle verbunden ist, wobei ein Aufladungsbereich 40 vorgesehen ist, welcher zum Ausbilden einer mit elektrischen Ladungen angereicherten Schicht ein oder mehrere Elektroden 60, 62 aufweist, und wobei ein Abscheideflächen 70 aufweisender Abscheidebereich 34 vorgesehen ist, welcher dem Aufladungsbereich 40 nachgeordnet ist. Die Erfindung betrifft auch ein Verfahren zum Abscheiden von Partikeln aus dem Abluftstrom einer Beschichtungskabine 2, wobei der Abluftstrom zunächst durch einen Aufladungsbereich 40 geführt wird, in dem eine Aufladung von Partikeln der Abluft erfolgt, und wobei der Abluftstrom nach Verlassen des Aufladungsbereichs 40 einen Abscheidebereich 34 durchströmt, in dem sich aufgeladene Partikel der Abluft an Abscheideflächen 70 abscheiden. Die erfindungsgemäßen Vorteile betreffen eine verbesserte Inbetriebsetzung, Instandhaltung, Reinigung bzw. Wartung sowie eine geringere Störanfälligkeit.

## Patentansprüche

1. Vorrichtung zum Abscheiden von Partikeln aus einem Abluftstrom mit
(a) einem Eintrittsbereich (36) für den Abluftstrom,
(b) einem Austrittsbereich (38) für den Abluftstrom,
(c) einer Abscheideeinrichtung (74), welche entlang des Abluftstroms angeordnet ist,
(d) mindestens einer Elektrodenanordnung, welche mit einer Hochspannungsquelle verbunden ist,
**dadurch gekennzeichnet, dass**
(e) ein Aufladungsbereich (40) vorgesehen ist, welcher zum Ausbilden einer mit elektrischen Ladungen angereicherten Schicht ein oder mehrere Elektroden (60, 62) aufweist, und dass
(f) ein Abscheidebereich (34) vorgesehen ist, welcher Abscheideflächen (70) aufweist und dem Aufladungsbereich (40) nachgeordnet ist.

2. Vorrichtung nach Anspruch 2, **dadurch gekennzeichnet, dass** die mit elektrischen Ladungen angereicherte Schicht des Aufladungsbereichs (40) den Abscheidebereich (34) zumindest im Wesentlichen überdeckend ausgebildet ist.

3. Vorrichtung nach Anspruch 1 oder 2, **dadurch gekennzeichnet, dass** die ein oder mehreren Elektroden (60, 62) in mehreren Elektrodenebenen (50, 52) angeordnet sind.

4. Vorrichtung nach Anspruch 3, **dadurch gekennzeichnet, dass** die ein oder mehreren Elektroden (60) einer ersten Elektrodenebene (50) sich im Wesentlichen längs einer ersten Richtung erstrecken und dass die ein oder mehreren Elektroden (62) einer zweiten Elektrodenebene (52) sich im Wesentlichen längs einer zweiten Richtung erstrecken, welche sich von der ersten Richtung unterscheidet.

5. Vorrichtung nach Anspruch 3 oder 4, **dadurch gekennzeichnet, dass** die erste Elektrodenebene (50) und die zweite Elektrodenebene (52) zueinander beabstandet angeordnet sind.

6. Vorrichtung nach Anspruch 5, **dadurch gekennzeichnet, dass** mindestens eine erste Hochspannungsquelle vorgesehen ist, die der ersten Elektrodenebene (50) zugeordnet ist, und dass mindestens eine zweite Hochspannungsquelle vorgesehen ist, die der zweiten Elektrodenebene (52) zugeordnet ist.

7. Vorrichtung nach Anspruch 4, **dadurch gekennzeichnet, dass** sich die erste Elektrodenebene (50) und die zweite Elektrodenebene (52) berühren.

8. Vorrichtung nach einem der Ansprüche 1 bis 7, **dadurch gekennzeichnet, dass** mindestens eine der Elektroden (60, 62) mehrere Spitzen aufweist, welche Spitzen zumindest teilweise aus der Elektrodenebenen (50 bzw. 52), in welcher sich die mindestens eine Elektrode (60, 62) erstreckt, hervorragen.

9. Vorrichtung nach einem der Ansprüche 1 bis 8, **dadurch gekennzeichnet, dass** die Elektroden (60, 62) modular aus der Vorrichtung entnehmbar ausgebildet sind.

10. Vorrichtung nach einem der Ansprüche 1 bis 9, **dadurch gekennzeichnet, dass** die Elektroden (60, 62) eine gitterförmige Anordnung ausbilden.

11. Vorrichtung nach einem der Ansprüche 1 bis 10, **dadurch gekennzeichnet, dass** der Aufladungsbereich (40) mehrere Teilabschnitte aufweist, wobei für einen Teilabschnitt jeweils mindestens eine Hochspannungsquelle vorgesehen ist.

12. Anlage zum Beschichten von Gegenständen mit einer Beschichtungskabine (2) und mit einem an die Beschichtungskabine (2) angrenzenden Anlagenbereich (28), wobei die Beschichtungskabine (2) eine Öffnung (18) aufweist, durch welche ein Abluftstrom der Beschichtungskabine (2) dem angrenzenden Anlagenbereich (28) zuführbar ist, **dadurch gekennzeichnet, dass** in dem angrenzenden Anlagenbereich (28) eine Vorrichtung nach einem der Ansprüche 1 bis 11 angeordnet ist.

13. Anlage nach Anspruch 12, **dadurch gekennzeichnet, dass** die Beschichtungskabine (2) eine Lackierkabine für Fahrzeugkarosserien (4) ist.

14. Anlage nach Anspruch 13, **dadurch gekennzeichnet, dass** die Anlage mehrere Teilabschnitte aufweist, denen jeweils Teilabschnitte des Aufladungsbereichs (40) zugeordnet sind, wobei für einen Teilabschnitt des Aufladungsbereichs (40) jeweils mindestens eine Hochspannungsquelle vorgesehen ist.

15. Verfahren zum Abscheiden von Partikeln aus dem Abluftstrom einer Beschichtungskabine (2), **dadurch gekennzeichnet, dass**
(a) der Abluftstrom zuerst durch einen von Elektroden (60, 62) durchzogenen Aufladungsbereich (40) geführt wird, in dem eine Aufladung von Partikeln der Abluft erfolgt, und dass
(b) der Abluftstrom anschließend durch einen Abscheidebereich (34) geführt wird, in dem sich Partikel der Abluft an Abscheideflächen (70) abscheiden.
